**Europäisches Patentamt**

**European Patent Office** (11) Veröffentlichungsnummer: **0 103 153**
**B1**

**Office européen des brevets**

(12) **EUROPÄISCHE PATENTSCHRIFT**

(45) Veröffentlichungstag der Patentschrift: (51) Int. Cl.⁴: **G 03 B 27/52, G 03 B 42/02**
30.04.86

(21) Anmeldenummer: 83107763.1

(22) Anmeldetag: 06.08.83

(54) **Einrichtung zum Erkennen von zwei oder mehreren übereinanderliegenden Filmblättern.**

(30) Priorität: 17.08.82 DE 3230524

(43) Veröffentlichungstag der Anmeldung:
21.03.84 Patentblatt 84/12

(45) Bekanntmachung des Hinweises auf die Patenterteilung:
30.04.86 Patentblatt 86/18

(84) Benannte Vertragsstaaten:
**FR GB IT**

(56) Entgegenhaltungen:
**DE - A - 2 116 802**
**DE - A - 2 403 202**
**DE - A - 2 414 792**
**DE - A - 2 924 489**
**DE - A - 3 111 952**
**US - A - 4 269 500**

(73) Patentinhaber: **AGFA-GEVAERT Aktiengesellschaft,
D-5090 Leverkusen 1 (DE)**

(72) Erfinder: **Wauer, Dieter, Flurweg 13, D-8021 Taufkirchen
(DE)**
Erfinder: **Plaschke, Herbert, Graf-Törring-Strasse 12,
D-8031 Gernlinden (DE)**
Erfinder: **Butz, Otto, Postweg 14,
D-8000 München 82 (DE)**
Erfinder: **Ganser, Josef, Friedrich-Hebbel-Strasse 16,
D-8000 München 70 (DE)**

## Beschreibung

Die Erfindung betrifft eine Einrichtung zum Erkennen von zwei oder mehr übereinanderliegenden Filmblättern, insbesondere Röntgenfilmblättern, auf deren Transportbahn nach Abnahme von einem Filmblatt-Stapel mit einer auf einer Seite der Transportbahn angeordneten Stahlungsquelle und einem auf der anderen Seite angeordneten Fotoempfänger, der mit einer bei Vorliegen von zwei oder mehreren Blättern ein entsprecnendes Signal abgebenden Auswertschaltung in Verbindung steht, wobei der Wert der Dichte eines in die Lichtstrecke zwischen Lichtquelle und Fotoempfänger eingesetzten einzelnen Filmblattes in einem Rechner speicherbar ist und der gespeicherte Wert als Referenzsignal der Messung des nächsten Filmblattes dient.

Eine Einrichtung der eingangs genannten Art ist aus der DE-A- 21 16 802 bekannt. Bei dieser Einrichtung sind gegenüber der Lichtquelle zwei Fotoempfünger vorgesehen, wobei im Strahlengang des einen Fotoempfängers ein Testblatt liegt und der andere Fotoempfänger den Transportweg der Blätter kontrolliert. Eine solche Einrichtung ist jedoch aufwendig und bringt die Gefahr von Fehlmessungen, da sich die Dichte des Testblattes auch bei der Bestrahlung mit Infrarot mit der Zeit ändert. Deshalb muß das Testblatt laufend aus gewechselt werden. Dieses Auswechseln muß auch bei einem Wechsel des Filmmaterials erfolgen. Wird das Auswechseln vergesssen, so kann dies ebenfalls zu Fehlmessungen führen.

Eine andere Einrichtung der eingangs genannten Art ist außerdem bekannt durch die DE-A 31 11 952. Bei dieser bekannten Vorrichtung ist die Intensität der Sender-Lichtquelle über ein Potentiometer lediglich einstellbar und nicht regelbar. Außerdem ist ein Paar von Sonden (Lichtschranken) für die Blattabtastung erforderlich, und es sind ein A/D-Wandler auf der Empfängerseite der Sonden und hinter dem Wandler ein Rechner vorgesehen. Der Rechner muß auf definierte Werte vorab eingestellt werden, wobei nicht erkennbar ist, wie dies angesichts der Einstellung der Lichtquellen-(Sonden-)-Intensität möglich sein oder durchgeführt werden soll. Durch eine falsche Einstellung der Lichtquellen-Intensität kann die ganze Einrichtung unbrauchbar werden; sie arbeitet jedenfalls nicht vollautomatisch.

Aufgabe der Erfindung ist es daher, eine Einrichtung der eingangs genannten Art derart weiterzubilden, daß mit einfachen Mitteln eine sichere Erkennung von zwei oder mehr Blättern gewährleistet ist, wobei der Bedienungskomfort erhöht sein soll.

Diese Aufgabe wird durch dle im Kennzeichen des Anspruchs 1 aufgeführten Mittel gelöst.

Mit der Erfindung wird mit nur einem Fotoempfänger und ohne des Gebrauchs eines zusätzlichen Referenzblattes eine Einrichtung geschaffen, mit der eine automatische Eichung auf das jeweilige Material durchgeführt werden kann.

Mit der erfindungsgemäßen Auswertschaltung ist es auch möglich, eine leere Meßstrecke zu erkennen, d. h., daß überhaupt kein Filmblatt gefahren wird.

In einer Ausgestaltung der Erfindung kann vorgesehen werden, daß der für jedes neue Filmblatt gemessene Ist-Wert auf den in der Schaltung eingestellten Soll-Wert nachjustiert und als neuer Intensitätswert für die Strahlungsquelle gespeichert wird. Damit werden Fehlmessungen aufgrund alternder optoelektronischer Bauteile oder aufgrund von Dichteveränderungen im Material vermieden. Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen:

Fig. 1 eine schematische Ansicht einer Transportbahn für Filmblätter mit einer Lichtstrecke zur Mehrblatterkennung;

Fig. 2 ein Blockschaltbild der Auswertschaltung; und

Fig. 3 ein Diagramm mit Spannungskennlinien am Fotoempfänger für unterschiedliche Meßzustände.

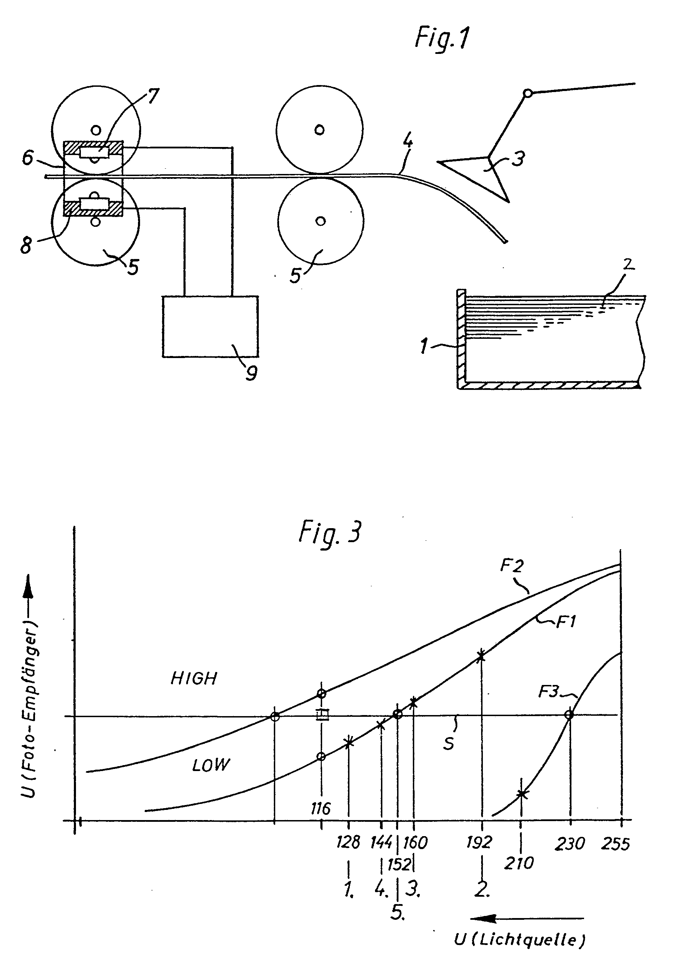

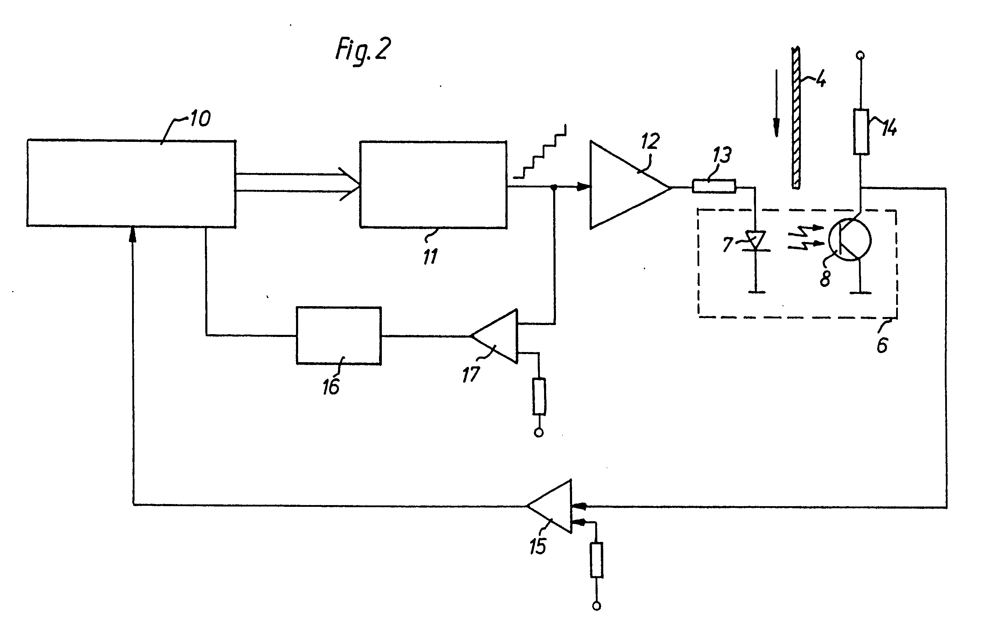

In Fig. 1 ist mit 1 ein Behälter bezeichnet, in welchem sich ein Stapel mit Filmblättern 2 befindet. Mit 3 ist eine andeutungsweise wiedergegebene Saugeinrichtung bezeichnet, welche ein Filmblatt 4 an zwei hintereinanderliegende Transportwalzenpaare 5 übergeben hat. Die Transportwalzenpaare 5 sind entweder durch einzelne Röllchen gebildet oder es ist am zweiten Walzenpaar ein Ausschnitt der Walzen im Bereich der Blattführungsbahn vor gesehen, in welcher eine Meßlichtstrecke 6 angeordnet ist. Die Meßlichtstrecke 6 weist einen Infrarotsender 7 auf, der an einer Seite der Führungsbahn für das Filmblatt 4 angeordnet ist, sowie einen Fotoempfänger 8, der dem Sender 7 gegenüber auf der anderen Seite der Transportbahn liegt. Lichtsender oder -quelle 7 und Fotoempfänger 8 stehen mit einer Auswertschaltung 9 in Verbindung, welche im einzelnen in Fig. 2 dargestellt ist.

In Fig. 2 ist ebenfalls die Meßlichtstrecke 6 mit dem Sender 7 und dem Fotoempfänger 8 dargestellt. Außerdem ist ein Filmblatt 4 gezeigt, das zwischen Sender und Empfänger eingeführt werden soll. Im übrigen zeigt Fig. 2 die Auswertschaltung 9.

Die Auswertschaltung 9 weist einen Rechner 10 auf, dem ein Digital/ Analog-Wandler 11 nachgeschaltet ist. Der Ausgang des Digital/Analog-Wandlers 11 ist mit einem Leistungsverstärker 12 verbunden, der über einen Widerstand 13 an dem Lichtsender 7 anliegt. Der Fotoempfänger 8 liegt mit dem Emitter auf Masse und der Kollektor liegt zum einen über einen Widerstand 14 an der Spannungsversorgung und zum anderen am Eingang eines Komparators 15. Der Ausgang des Komparators 15 ist mit dem Rechner 10 verbunden.

Die Wirkungsweise der Auswertschaltung 9 wird im Zusammenhang mit Fig. 3 beschrieben.

Erfindungsgemäß wird der Lichts ender 7 mit einer variablen Spannung betrieben. Zu diesem Zweck ist die Versorgungsspannung für den Lichtsender von Null bis zum Maximum im Rechner 10 digitalisiert und beispielsweise in 255 Schritte eingeteilt, wie auf der Abszisse in Fig. 3 zu sehen ist. In dem Digital/Analog-Wandler 11 werden diese Schritte in eine analoge Spannung umgewandelt, wie durch die Treppenform in Fig. 2 gezeigt ist. Der Leistungsver stärker 12 verstärkt den jeweiligen Spannungswert auf die nötige Betriebsspannung des Senders 7. Damit ist die Strahlungsintensität des Senders 7 variabel ausgebildet.

Die von dem Sender 7 ausgehende Strahlung fällt entweder direkt oder durch ein, zwei oder mehr Blätter auf den Fotoempfänger 8 und löst damit an diesem einen unterschiedlichen Spannungsabfall aus. Der Ausgang des Fotoempfängers 8 liegt an einem Eingang eines Komparators 15, an dessen anderem Eingang als Schwellenwert eine Spannung anliegt, die als mittlerer Durchschnittswert des Spannungsabfalls am Fotoempfänger gewählt werden kann oder mit anderen Worten die Hälfte des maximal erreichbaren Spannungsabfalls am Fotoempfänger sein kann. Der Ausgang des Komparators 15 liegt am Rechner 10 an und wird in der nachfolgend beschriebenen Weise aus gewertet.

In Fig. 3 sind auf der Abszisse die dem Digital/Analog-Wandler 11 vorgegebenen Digitalwerte in dezimaler Form aufgetragen, wobei der Höchstwert 255 etwa einer Bestromung gleich Null, also Dunkelheit des Senders 7 und der Digitalwert 1 höchste Intensität darstellt. Auf der Ordinate sind die Werte des Spannungsabfalls am Fotoempfänger 8 aufgetragen, wobei die zur Abszisse parallel verlaufende Linie die Spannungsvorgabe oder Schwelle am Komparator 15 wiedergibt.

Die Intensität, mit der der Sender 7 die Transportbahn des Filmblattes 4 durchstrahlt, wird durch Eichung mit dem ersten Filmblatt oder einem Testblatt festgelegt. Dazu wird ein Blatt 4 in die Lichtstrecke 6 eingebracht, und der Rechner 10 gibt einen beliebigen Maximalwert vor, mit dem die Lichtquelle 7 bestromt wird. Statt eines Maximalwertes kann ebenso ein empirisch ermittelter Wert in dem Rechner eingestellt sein, bei dem zur Abkürzung der Eichzeit die Eichung begonnen werden soll. Bei dem dargestellten Beispiel ist als erster Intensitätswert die Dezimalstelle 128 gewählt. Mit dieser Intensität wird das Blatt durchstrahlt und am Fotoempfänger 8 der Spannungsabfall gemessen. Im Komparator wird dieser Spannungsabfall mit der Schwelle verglichen. In Fig. 3 ist bereits eine Kurve Fl dargestellt, welche der Dichte eines einzigen Blattes entspricht. Der Spannungsabfall aufgrund der Dichte dieses Blattes liegt unterhalb der ein gestellten Schwelle, so daß der Komparator auf "Low" erkennt. In einem vorgeschriebenen programmablauf wird nun im Rechner die Dezimalstelle 128 halbiert und ihr hinzugerechnet (128 + 64 = 192). Auf diesen neu errechneten Wert wird die Intensität der Lichtquelle 7 eingestellt und der Spannungsabfall am Fototransistor 8 am Komparator 15 verglichen, welcher auf einen Wert oberhalb der Schwelle erkennt und das Signal "High" abgibt. Das letzte Intervall von 64 Schritten wird nun wiederum halbiert, und, da das letzte Signal "High" war, von 192 subtrahiert (192 - 32 = 160), was in Fig. 3 als dritter Näherungsschritt gezeigt ist. Nach dem das Aus gangssignal des Komparators auch wieder "High" ist, wird das nächste halbierte Intervall von 16 Schritten wiederum subtrahiert (160 - 16 = 144). Der vierte Näherungsschritt liegt nun wieder im Low-Bereich, womit das nächste halbierte Intervall wieder addiert werden muß (144 + 8 = 152).

Dieses Näherungs- oder Eichverfahren wird siebenmal wiederholt, so daß jeder Wert zwischen 0 und 255 zu erfassen ist.

Der letzte auf diese Weise ermittelte Wert wird nun im Rechner abgespeichert. Wenn nun ein nächstes Filmblatt in die Lichtstrecke 6 gelangt, wird der Lichtsender 7 von vornherein mit einem Strom beaufschlagt, der gleich ist dem im Rechner abgespeicherten Wert, vermindert um einen empirisch ermittelten Dezimalwert, beispielsweise von 36 Schritten. Bei dem oben beschriebenen Eichverfahren könnte es nämlich sein, daß der angenäherte wert auf der Schwelle oder auf einem Dezimalwert oberhalb oder unterhalb der Schwelle liegt. Dies er Meßwert wäre also für eine Referenzspannung zu ungewiß. Aus diesem Grunde wird ein konstanter Wert (36 Schritte) abgezogen, die Intensität des Senders 7 also erhöht, womit sichergestellt ist, daß sich der Komparatorausgang auf "Low" befindet (116). Dieser konstante Wert ist empirisch ermittelt worden und befindet sich auf der Schwellenlinie S zwischen den Kurven F1 mit der Dichte eines einzigen Blattes und der Kurve F2 mit der Dichte von zwei Blättern.

Bei korrekter Beschickung der Transportbahn mit nur einem Filmblatt erscheint am Komparatorausgang das Signal "Low", wogegen bei Doppel- oder Mehrfachfilm das Signal "Figh" abgegeben und über den Rechner 10 eine Warn- und/oder Stoppeinrichtung 16 aus gelöst wird. Mit dies er letztgenannten Einrichtung können verschiedene Funktionen ausgelöst werden, beispielsweise kann der Maschinentransport angehalten und ein Signal abge geben werden, oder der Maschinentransport kann umgekehrt werden, damit das Doppel- oder Mehrblatt aus der Transportbahn wieder aus gefahren wird.

In einer Ausgestaltung der Erfindung können die Figenschaften des Rechners noch weiter ausgenutzt werden. Reispielsweise ist es möglich, den Fichvorgang der Lichtstrecke immer dann durchzuführen, wenn ein Befehl vorliegt, daß ein neues Blatt transportiert werden soll. Ein solcher Befehl kann beispielsweise durch die Tätigkeit der Saugeinrichtung 3 geliefert werden. Mit der regelmäßigen Wiederholung der Fichung können zwei Dinge erreicht werden. Zum einen kann damit einer Alterung der optoelektronischen Bauteile entgegengewirkt und zum anderen eine Leerblatt-Erkennung durchgeführt werden.

Wenn aufgrund einer Alterung des Senders 7 die Lichtkraft nach läßt, muß der Strom in dem Sender erhöht werden, um die gleiche Lichtstärke zu erreichen. In dem Diagramm würde das bedeuten, daß der Umschlagpunkt "Low/High" sich etwas nach links verlagern würde. Nachdem der Eichvorgang weit weniger Zeit benötigt, als für den Transport eines Blattes aufgewendet wird, kann in dem Rechner also ohne weiteres vorgesehen werden, für jedes Blatt den Fichvorgang durchzuführen. Dabei kann der jeweils neu ermittelte Wert neu gespeichert werden. Mit dieser automatischen Nachregelung des Systems bei jedem Blatt kann ebenso eine Anpassung anderer Filmblätter mit abweichender Dichte an das System erfolgen.

In Fig. 3 ist mit F3 die Kurve für die direkte Bestrahlung des Fotoempfängers 8 durch den Sender 7 wiedergegeben, d. h. die sog. "Leerblatt"-Kurve. Wenn also für jeden aus gelösten Blatt-Transport per Befehl eine Fichung des Systems durchgeführt wird, regelt sich bei Lehrblatt die Stromversorgung des Senders auf einen Dezimalwert von beispielsweise 230. In einem weiteren Komparator 17 kann dieser Dezimalwert mit einem Wert von beispielsweise der Dezimalstelle 210 verglichen werden. Überschreitet der Umschlagpunkt Low/High die Dezimals telle 210, so löst der Komparator die Warn- und/oder Stoppeinrichtung 16 aus, da kein Blatt gefördert worden ist, der Blattstapel u. U. zu Ende ist.

Zu diesem Zweck ist der eine Eingang des Komparators mit dem Aus gang des Digital/Analog-Wandlers 11 und der andere mit einer konstanten Spannungsquelle verbunden. Der Ausgang des Komparators 17 liegt an der Warn- und/ oder Stoppeinrichtung 16.

Selbstverständlich könnte die Funktion des Komparators 17 sowie die Warn- und/oder Stoppeinrichtung 16 in den Rechner 10 verlegt werden.

**Patentansprüche**

1. Einrichtung zum Erkennen von zwei oder mehr übereinanderliegenden Filmblättern, insbesondere Röntgenfilmblättern, auf deren Transportbahn nach Abnahme von einem Filmblatt-Stapel, mit einer auf einer Seite der Transportbahn angeordneten Stahlungsquelle und einem auf der anderen Seite angeordneten Fotoempfänger, der mit einer bei Vorliegen von zwei oder mehreren Blättern ein entsprechendes Signal abgebenden Auswertschaltung in Verbindung steht, wobei der Wert der Dichte eines in die Lichtstrecke zwischen Lichtquelle und Fotoempfänger eingesetzten einzelnen Filmblattes in einem Rechner speicherbar ist und der gespeicherte Wert als Referenzsignal der Messung des nächsten Filmblattes dient, dadurch gekennzeichnet, daß die Intensität der Lichtquelle (7) regelbar ist, daß die Intensitätsregelung der Lichtquelle (7) in dem Rechner (10) digitalisiert ist und zwischen Rechner (10) und Lichtquelle (7) ein Digital/Analog-Wandler (11) vorgesehen ist, daß ein Komparator (15) mit einer einem durchschnittlichen Spannungsabfallwert am Fotoempfänger (8) entsprechenden Schwelle vorgesehen ist, daß die Intensität der Lichtquelle (7) auf einen denn durchschnittlichen Abfallwert am Fotoempfänger (8) in Abhängigkeit von einem einzelnen Filmblatt entsprechenden Wert ("152") einstellbar ist und die Intensität der Lichtquelle (7) für die jeweils nächste Messung um einen festgelegten Wert ("36") gegenüber dem gespeicherten Wert ("152") erhöht ist und daß zum Zwecke der Eichung bzw. zur Ermittlung des dem Spannungsabfallwert am Fotoempfänger (8) entsprechenden Intensitätswertes ein Näherungsverfahren an die festgelegte Schwelle durchgeführt wird.

2. Einrichtung nach Anspruch 1, dadurch gekennzeichnet, daß zur Erkennung eines fehlenden Blattes ein zweiter Komparator (17) vorgesehen ist, an dessen einem Eingang der Ausgang des Digital/Analog-Wandlers (11) und an dessen anderem Eingang ein einem Digitalwert entsprechender Spannungswert anliegt, der sich in dem Bereich jenseits der kleinsten zu erwartenden Dichte eines einzelnen Filmblattes (4) befindet.

3. Einrichtung nach Anspruch 1, dadurch gekennzeichnet, daß das Näherungsverfahren bei jedem neuen Filmblatt durchgeführt wird.

4. Einrichtung nach Anspruch 2, dadurch gekennzeichnet, daß der zweite Komparator (17) in dem Rechner (1) integriert ist.

**Claims**

1. Apparatus for detecting two or more superimposed film sheats, in particular X-ray film sheets, on their path of transport after having been removed from a pile of film sheets, comprising a radiation source arranged on one side of the path of transport and a photodetector arranged on the other side, which photodetector is connected to an evaluating circuit which, if two or more sheets are present, delivers a corresponding signal, it being possible to store in a computer the value of the density of an individual film sheet inserted into the light path between the light source and the photodetector and the stored value serving as a reference signal for the measurement of the next film sheet, characterised in that the intensity of the light source (7) can be regulated, in that the regulation of the intensity of the light source (7) is digitised in the computer (10) and a digital-to-analog converter (11) is provided between the computer (10) and the light source (7), in that a comparator (15) is provided which has a threshold corresponding to an average value of the drop in voltage at the photodetector (8), in that the intensity of the light source (7) can be adjusted to a value ("152") corresponding to the average drop in voltage at the photodetector (8) depending on an individual film sheet and the intensity of the light source (7) is increased in comparision with the stored value ("152") for the next measurement concerned, by a set value ("36"), and in that, for the purpose of calibration or for the determination of the intensity value corresponding to the value of the drop in voltage at the photodetector (8) a process of approximation to set threshold is carried out.

2. Apparatus according to Claim 1, characterised in that, for the detection of a missing sheet a second comparator (17) is provided, to the one inlet of which the outlet of the digital-to analog computer (11) is connected and to the other inlet of which a voltage value correspondine to a digital value is applied, which voltage value lies within the range outside the smallest density of an individual film sheet (4) which can be expected.

3. Apparatus according to Claim 1, characterised in that the approximation process is carried out for each new film sheet.

4. Apparatus according to Claim 2, characterised in that the second comparator (17) is integrated in the computer (1).

**Revendications**

1. Dispositif pour reconnaître deux feuilles de film superposées ou davantage, en particulier feuilles de film de rayons X, sur leur trajet de transport, après enlèvement d'un empilement de feuilles de film, comprenant une source de rayonnement disposée sur un côté du trajet de transport et un photorécepteur disposé sur l'autre côté et qui est en communication avec un circuit d'évaluation délivrant un signal correspondant lorsqu'il y a deux feuilles ou davantage, la valeur de la densité d'une feuille individuelle de film qu'on introduit dans le trajet lumineux entre la source lumineuse et le photorécepteur pouvant être emmagasinée dans un calculateur et la valeur accumulée servant alors de signal de référence pour la mesure de la prochaine feuille de film, dispositif caractérisé en ce que l'intensité de la source lumineuse (7) est réglable, en ce que la régulation d'intensité de la source lumineuse (7) est numérisée dans le calculateur (10) et on prévoit entre le calculateur (10) et la source lumineuse (7) un convertisseur (11) numérique/analogique, en ce qu'on prévoit un comparateur (15) ayant un seuil correspondant à une valeur moyenne de chute de tension sur le photorécepteur (8), en ce que l'intensité de la source lumineuse (7) peut être réglée à une valeur ("152") correspondant à la valeur moyenne de chute sur le photorécepteur (8) en fonction d'une feuille individuelle de film et l'intensité de la source lumineuse (7) est augmentée pour la prochaine mesure respective d'une valeur fixée ("36") par rapport à la valeur accumulée ("152") et en ce que dans un but d'étalonnage ou pour obtenir la valeur d'intensité correspondant à la valeur de chute de tension sur le photorécepteur (8), on réalise un processus d'approximation au seuil déterminé.

2. Dispositif selon la revendication 1, caractérisé en ce que pour reconnaître une feuille erronée on prévoit un deuxième comparateur (17) sur l'une des entrées duquel on applique la sortie du convertisseur (11) numérique/analogique et sur l'autre entrée duquel on applique une valeur de tension correspondant à une valeur numérique et qui se trouve dans la gamme du côté de la densité la plus faible à attendre d'une feuille individuelle de film (4).

3. Dispositif selon la revendication 7, caractérisé en ce que le processus d'approximation est réalisé pour chaque nouvelle feuille de film.

4. Dispositif selon la revendication 2, caractérisé en ce que le deuxième comparateur (17) est intégré dans le calculateur (1).

## Fig.1

## Fig. 3

U (Foto-Empfänger) →

HIGH

LOW

F2

F1

F3

S

116

128    144  160    192        230    255
         152                210

1.    4.  3.
        5.

U (Lichtquelle) →

Fig.2

0 103 153